# EUROPEAN PATENT APPLICATION

(11) **EP 4 657 865 A1**
(43) Date of publication of application: **03.12.2025**
(21) Application number: 25175300.0
(22) Date of filing: 09.05.2025
(51) Int. Cl.: H04N 21/422, G06F 3/01, H04L 65/1093, H04N 21/43, H04N 21/472, H04W 4/80

(54) **SYSTEMS AND METHODS FOR JOINING SHARED PLAYBACK SESSIONS**

(30) Priority: 28.05.2024 US 202418676244
(71) Applicant: Spotify AB, 111 53 Stockholm (SE)
(72) Inventor: LUCENA ARAUJO, Rafael, 111 53 STOCKHOLM (SE); MARHIC, Gaël, 111 53 STOCKHOLM (SE)
(74) Representative: Ström & Gulliksson AB

(57) **Abstract**

A method includes, while a first user associated with a first user device is participating in a first shared playback session and a second user associated with a second user device is not participating in the first shared playback session: detecting one or more of (i) a first shake movement of the first user device or (ii) a second shake movement of the second user device. The method includes, in accordance with a first determination that the first shake movement is detected within a threshold time period of detecting the second shake movement, adding the second user to the first shared playback session; and in accordance with a second determination that the first shake movement is not detected within the threshold time period, forgoing adding the second user to the first shared playback session.

## Description

### TECHNICAL FIELD

The disclosed embodiments relate generally to media provider systems, and, in particular, to initiating and/or joining shared playback sessions.

### BACKGROUND

Access to electronic media, such as audio content, has expanded dramatically over time. As a departure from physical media, media content providers stream media to electronic devices across wireless networks, improving the convenience with which users can digest and experience such content.

### SUMMARY

In some embodiments of the present disclosure, a shared playback session is shared among a plurality of users. To improve the efficiency and convenience of joining a shared playback session of a nearby user, a predefined gesture, such as a shake gesture, is used as authentication for allowing other devices to join a shared playback session and for the other devices to join the shared playback session. For example, detecting the predefined gesture at a first device that is already participating in the shared playback session and detecting the predefined gesture at a second device that is not yet participating in the shared playback session, within a close time frame of each other, is accepted as intent, by both parties, to allow the second device to join the shared playback session. As such, devices are more easily able to add and/or join shared playback sessions that are active at a nearby device.

To that end, in accordance with some embodiments, a method is provided. The method includes, while a first user associated with a first user device is participating in a first shared playback session and a second user associated with a second user device is not participating in the first shared playback session: detecting one or more of (i) a first shake movement of the first user device or (ii) a second shake movement of the second user device. The method includes, in accordance with a first determination that the first shake movement of the first user device is detected within a threshold time period of detecting the second shake movement of the second user device, adding the second user associated with the second user device to the first shared playback session; and in accordance with a second determination that the first shake movement of the first user device is not detected within the threshold time period of detecting the second shake movement of the second user device, forgoing adding the second user associated with the second user device to the first shared playback session.

In accordance with some embodiments, an electronic device is provided. The electronic device includes one or more processors and memory storing one or more programs. The one or more programs include instructions for performing any of the methods described herein.

In accordance with some embodiments, a non-transitory computer-readable storage medium is provided. The non-transitory computer-readable storage medium stores one or more programs for execution by an electronic device with one or more processors. The one or more programs comprising instructions for performing any of the methods described herein.

Thus, systems are provided with improved methods of joining a shared playback session.

### BRIEF DESCRIPTION OF THE DRAWINGS

The embodiments disclosed herein are illustrated by way of example, and not by way of limitation, in the figures of the accompanying drawings. Like reference numerals refer to corresponding parts throughout the drawings and specification.
FIG. 1 is a block diagram illustrating a media content delivery system, in accordance with some embodiments.
FIG. 2 is a block diagram illustrating an electronic device, in accordance with some embodiments.
FIG. 3 is a block diagram illustrating a media content server, in accordance with some embodiments.
FIGS. 4A-4H are example user interfaces illustrating initiating and/or joining shared playback sessions, in accordance with some embodiments.
FIGS. 5A-5C are flow diagrams illustrating a method for joining a shared playback session, in accordance with some embodiments.

### DETAILED DESCRIPTION

Reference will now be made to embodiments, examples of which are illustrated in the accompanying drawings. In the following description, numerous specific details are set forth in order to provide an understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It will also be understood that, although the terms first, second, etc. are, in some instances, used herein to describe various elements, these elements should not be limited by these terms. These terms are used only to distinguish one element from another. For example, a first electronic device could be termed a second electronic device, and, similarly, a second electronic device could be termed a first electronic device, without departing from the scope of the various described embodiments. The first electronic device and the second electronic device are both electronic devices, but they are not the same electronic device.

The terminology used in the description of the various embodiments described herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting" or "in accordance with a determination that," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]" or "in accordance with a determination that [a stated condition or event] is detected," depending on the context.

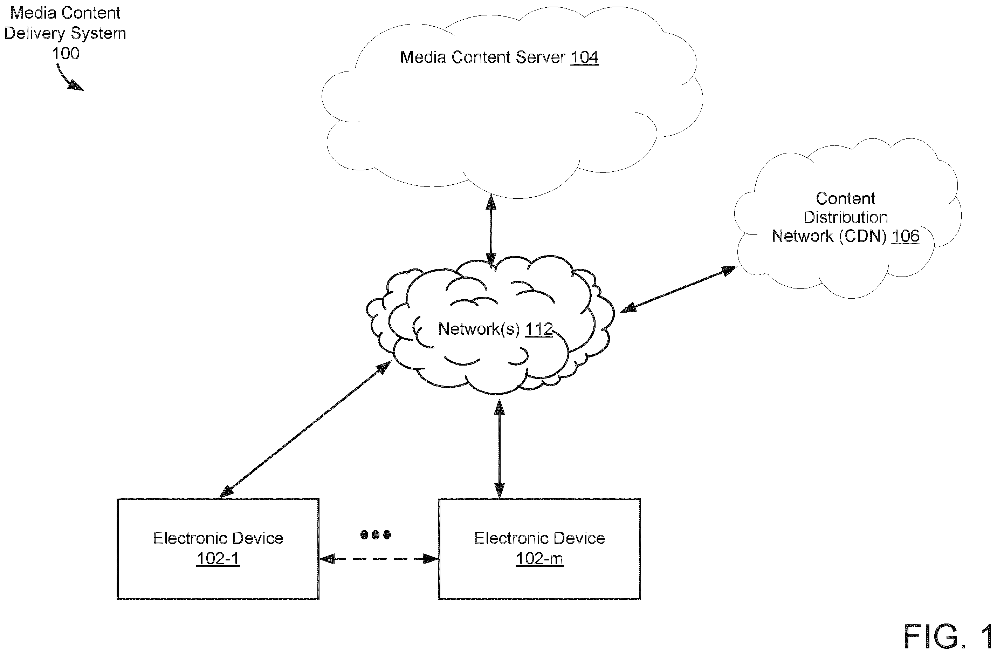

FIG. 1 is a block diagram illustrating a media content delivery system 100, in accordance with some embodiments. The media content delivery system 100 includes one or more electronic devices 102 (e.g., electronic device 102-1 to electronic device 102-m, where m is an integer greater than one), one or more media content servers 104, and/or one or more content distribution networks (CDNs) 106. The one or more media content servers 104 are associated with (e.g., at least partially compose) a media-providing service. The one or more CDNs 106 store and/or provide one or more content items (e.g., to electronic devices 102). In some embodiments, the CDNs 106 are included in the media content servers 104. One or more networks 112 communicably couple the components of the media content delivery system 100. In some embodiments, the one or more networks 112 include public communication networks, private communication networks, or a combination of both public and private communication networks. For example, the one or more networks 112 can be any network (or combination of networks) such as the Internet, other wide area networks (WAN), local area networks (LAN), virtual private networks (VPN), metropolitan area networks (MAN), peer-to-peer networks, and/or ad-hoc connections.

In some embodiments, an electronic device 102 is associated with one or more users. In some embodiments, an electronic device 102 is a personal computer, mobile electronic device, wearable computing device, laptop computer, tablet computer, mobile phone, feature phone, smart phone, an infotainment system, digital media player, a speaker, television (TV), and/or any other electronic device capable of presenting media content (e.g., controlling playback of media items, such as music tracks, podcasts, videos, etc.). Electronic devices 102 may connect to each other wirelessly and/or through a wired connection (e.g., directly through an interface, such as an HDMI interface). In some embodiments, electronic devices 102-1 and 102-m are the same type of device (e.g., electronic device 102-1 and electronic device 102-m are both speakers). Alternatively, electronic device 102-1 and electronic device 102-m include two or more different types of devices.

In some embodiments, electronic devices 102-1 and 102-m send and receive media-control information through network(s) 112. For example, electronic devices 102-1 and 102-m send media control requests (e.g., requests to play music, podcasts, movies, videos, or other media items, or playlists thereof) to media content server 104 through network(s) 112. Additionally, electronic devices 102-1 and 102-m, in some embodiments, also send indications of media content items to media content server 104 through network(s) 112. In some embodiments, the media content items are uploaded to electronic devices 102-1 and 102-m before the electronic devices forward the media content items to media content server 104.

In some embodiments, electronic device 102-1 communicates directly with electronic device 102-m (e.g., as illustrated by the dotted-line arrow), or any other electronic device 102. As illustrated in FIG. 1, electronic device 102-1 is able to communicate directly (e.g., through a wired connection and/or through a short-range wireless signal, such as those associated with personal-area-network (e.g., BLUETOOTH / BLE) communication technologies, radio-frequency-based near-field communication technologies, infrared communication technologies, etc.) with electronic device 102-m. In some embodiments, electronic device 102-1 communicates with electronic device 102-m through network(s) 112. In some embodiments, electronic device 102-1 uses the direct connection with electronic device 102-m to stream content (e.g., data for media items) for playback on the electronic device 102-m.

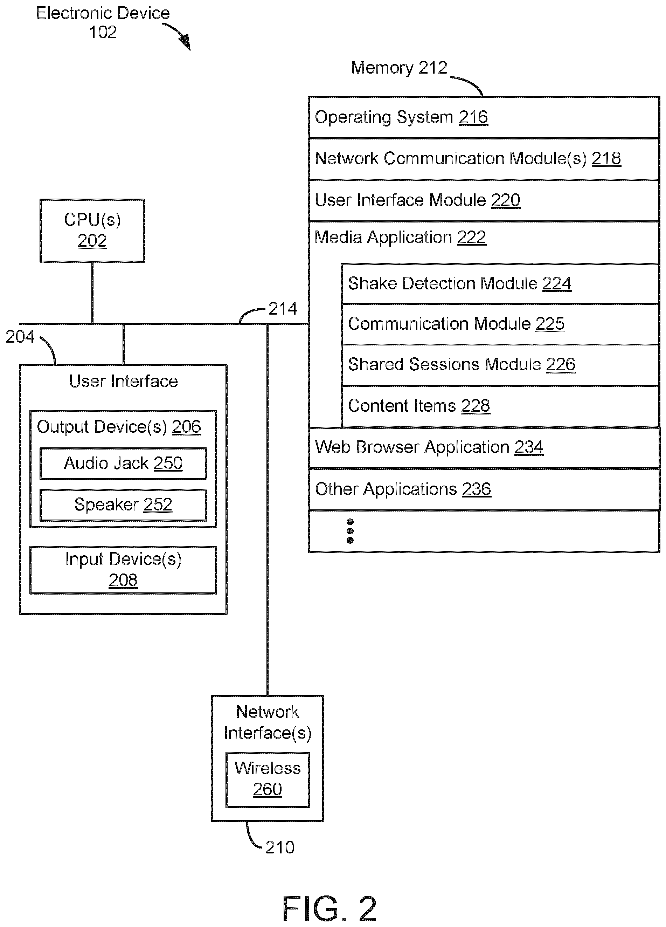

In some embodiments, electronic device 102-1 and/or electronic device 102-m include a media application 222 (FIG. 2) that allows a respective user of the respective electronic device to upload (e.g., to media content server 104), browse, request (e.g., for playback at the electronic device 102), and/or present media content (e.g., control playback of music tracks, playlists, videos, etc.). In some embodiments, one or more media content items are stored locally by an electronic device 102 (e.g., in memory 212 of the electronic device 102, FIG. 2). In some embodiments, one or more media content items are received by an electronic device 102 in a data stream (e.g., from the CDN 106 and/or from the media content server 104). The electronic device(s) 102 are capable of receiving media content (e.g., from the CDN 106) and presenting the received media content. For example, electronic device 102-1 may be a component of a network-connected audio/video system (e.g., a home entertainment system, a radio/alarm clock with a digital display, or an infotainment system of a vehicle). In some embodiments, the CDN 106 sends media content to the electronic device(s) 102.

In some embodiments, the CDN 106 stores and provides media content (e.g., media content requested by the media application 222 of electronic device 102) to electronic device 102 via the network(s) 112. Content (also referred to herein as "media items," "media content items," and "content items") is received, stored, and/or served by the CDN 106. In some embodiments, content includes audio (e.g., music, spoken word, podcasts, audiobooks, etc.), video (e.g., short-form videos, music videos, television shows, movies, clips, previews, etc.), text (e.g., articles, blog posts, emails, etc.), image data (e.g., image files, photographs, drawings, renderings, etc.), games (e.g., 2- or 3-dimensional graphics-based computer games, etc.), or any combination of content types (e.g., web pages that include any combination of the foregoing types of content or other content not explicitly listed). In some embodiments, content includes one or more audio media items (also referred to herein as "audio items," "tracks," and/or "audio tracks").

In some embodiments, media content server 104 receives media requests (e.g., commands) from electronic devices 102. In some embodiments, media content server 104 includes a voice API, a connect API, and/or key service. In some embodiments, media content server 104 validates (e.g., using key service) electronic devices 102 by exchanging one or more keys (e.g., tokens) with electronic device(s) 102.

In some embodiments, media content server 104 and/or CDN 106 stores one or more playlists (e.g., information indicating a set of media content items). For example, a playlist is a set of media content items defined by a user and/or defined by an editor associated with a media-providing service. The description of the media content server 104 as a "server" is intended as a functional description of the devices, systems, processor cores, and/or other components that provide the functionality attributed to the media content server 104. It will be understood that the media content server 104 may be a single server computer, or may be multiple server computers. Moreover, the media content server 104 may be coupled to CDN 106 and/or other servers and/or server systems, or other devices, such as other client devices, databases, content delivery networks (e.g., peer-to-peer networks), network caches, and the like. In some embodiments, the media content server 104 is implemented by multiple computing devices working together to perform the actions of a server system (e.g., cloud computing).

FIG. 2 is a block diagram illustrating an electronic device 102 (e.g., electronic device 102-1 and/or electronic device 102-m, FIG. 1), in accordance with some embodiments. The electronic device 102 includes one or more central processing units (CPU(s), i.e., processors or cores) 202, one or more network (or other communications) interfaces 210, memory 212, and one or more communication buses 214 for interconnecting these components. The communication buses 214 optionally include circuitry (sometimes called a chipset) that interconnects and controls communications between system components.

In some embodiments, the electronic device 102 includes a user interface 204, including output device(s) 206 and/or input device(s) 208. In some embodiments, the input devices 208 include a keyboard, mouse, or track pad. Alternatively, or in addition, in some embodiments, the user interface 204 includes a display device that includes a touch-sensitive surface, in which case the display device is a touch-sensitive display. In electronic devices that have a touch-sensitive display, a physical keyboard is optional (e.g., a soft keyboard may be displayed when keyboard entry is needed). In some embodiments, the output devices (e.g., output device(s) 206) include a speaker 252 (e.g., speakerphone device) and/or an audio jack 250 (or other physical output connection port) for connecting to speakers, earphones, headphones, or other external listening devices. Furthermore, some electronic devices 102 use a microphone and voice recognition device to supplement or replace the keyboard. Optionally, the electronic device 102 includes an audio input device (e.g., a microphone) to capture audio (e.g., speech from a user).

In some embodiments, the one or more network interfaces 210 include wireless and/or wired interfaces for receiving data from and/or transmitting data to other electronic devices 102, a media content server 104, a CDN 106, and/or other devices or systems. In some embodiments, data communications are carried out using any of a variety of custom or standard wireless protocols (e.g., NFC, RFID, IEEE 802.15.4, Wi-Fi, ZigBee, 6LoWPAN, Thread, Z-Wave, Bluetooth, ISA100.11a, WirelessHART, MiWi, etc.). Furthermore, in some embodiments, data communications are carried out using any of a variety of custom or standard wired protocols (e.g., USB, Firewire, Ethernet, etc.). For example, the one or more network interfaces 210 include a wireless interface 260 for enabling wireless data communications with other electronic devices 102, media presentations systems, and/or or other wireless (e.g., Bluetooth-compatible) devices (e.g., for streaming audio data to the media presentations system of an automobile). Furthermore, in some embodiments, the wireless interface 260 (or a different communications interface of the one or more network interfaces 210) enables data communications with other WLAN-compatible devices (e.g., a media presentations system) and/or the media content server 104 (via the one or more network(s) 112, FIG. 1).

In some embodiments, electronic device 102 includes one or more sensors including, but not limited to, accelerometers, gyroscopes, compasses, magnetometer, light sensors, near field communication transceivers, barometers, humidity sensors, temperature sensors, proximity sensors, range finders, and/or other sensors/devices for sensing and measuring various environmental conditions.

Memory 212 includes high-speed random-access memory, such as DRAM, SRAM, DDR RAM, or other random-access solid-state memory devices; and may include non-volatile memory, such as one or more magnetic disk storage devices, optical disk storage devices, flash memory devices, or other non-volatile solid-state storage devices. Memory 212 may optionally include one or more storage devices remotely located from the CPU(s) 202. Memory 212, or alternately, the non-volatile memory solid-state storage devices within memory 212, includes a non-transitory computer-readable storage medium. In some embodiments, memory 212 or the non-transitory computer-readable storage medium of memory 212 stores the following programs, modules, and data structures, or a subset or superset thereof:
- an operating system 216 that includes procedures for handling various basic system services and for performing hardware-dependent tasks;
- network communication module(s) 218 for connecting the electronic device 102 to other computing devices (e.g., media presentation system(s), media content server 104, and/or other client devices) via the one or more network interface(s) 210 (wired or wireless) connected to one or more network(s) 112;
- a user interface module 220 that receives commands and/or inputs from a user via the user interface 204 (e.g., from the input devices 208) and provides outputs for playback and/or display on the user interface 204 (e.g., the output devices 206);
- a media application 222 (e.g., an application for accessing a media-providing service of a media content provider associated with media content server 104) for uploading, browsing, receiving, processing, presenting, and/or requesting playback of media (e.g., media items). In some embodiments, media application 222 includes the following modules (or sets of instructions), or a subset or superset thereof:
   - a shake detection module 224 for detecting a shake movement of the electronic device 102, and optionally, for causing the electronic device 102 to perform one or more operations in response to detecting a shake movement. In some embodiments, an indication of a respective shake movement is sent from the electronic device 102 to the media content server 104;
   - communication module 225 for searching and/or establishing one or more communication networks (e.g., Bluetooth connections, device-to-device wireless connections, and/or other communications channels) between two or more electronic devices (e.g., between electronic device 102 and one or more other electronic devices);
   - shared sessions module 226 for initiating and/or managing shared playback sessions for one or more users of the media-providing service;
   - content items 228 that are provided by the media-providing service, including audio items (e.g., tracks, podcasts, audiobooks and/or other audio items) and/or video items;
- a web browser application 234 for accessing, viewing, and interacting with web sites; and
- other applications 236, such as applications for word processing, calendaring, mapping, weather, stocks, time keeping, virtual digital assistant, presenting, number crunching (spreadsheets), drawing, instant messaging, e-mail, telephony, video conferencing, photo management, video management, a digital music player, a digital video player, 2D gaming, 3D (e.g., virtual reality) gaming, electronic book reader, and/or workout support.

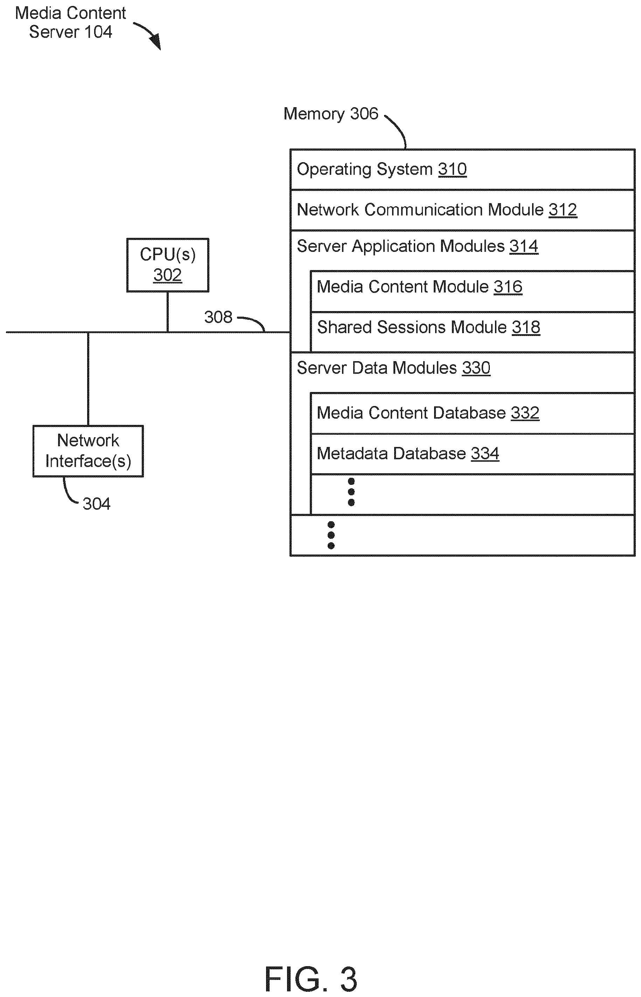

FIG. 3 is a block diagram illustrating a media content server 104, in accordance with some embodiments. The media content server 104 typically includes one or more central processing units/cores (CPUs) 302, one or more network interfaces 304, memory 306, and one or more communication buses 308 for interconnecting these components.

Memory 306 includes high-speed random access memory, such as DRAM, SRAM, DDR RAM, or other random access solid-state memory devices; and may include non-volatile memory, such as one or more magnetic disk storage devices, optical disk storage devices, flash memory devices, or other non-volatile solid-state storage devices. Memory 306 optionally includes one or more storage devices remotely located from one or more CPUs 302. Memory 306, or, alternatively, the non-volatile solid-state memory device(s) within memory 306, includes a non-transitory computer-readable storage medium. In some embodiments, memory 306, or the non-transitory computer-readable storage medium of memory 306, stores the following programs, modules and data structures, or a subset or superset thereof:
- an operating system 310 that includes procedures for handling various basic system services and for performing hardware-dependent tasks;
- a network communication module 312 that is used for connecting the media content server 104 to other computing devices via one or more network interfaces 304 (wired or wireless) connected to one or more networks 112;
- one or more server application modules 314 for performing various functions with respect to providing and managing a content service, the server application modules 314 including, but not limited to, one or more of:
   o a media content module 316 for storing one or more media content items and/or sending (e.g., streaming), to the electronic device 102, one or more requested media content item(s);
   o shared sessions module 318 for establishing and/or managing one or more shared playback sessions for one or more users that are participating and/or hosting a respective playback session. In some embodiments, establishing a shared playback session includes determining whether two or more electronic devices have detected shake movements (e.g., based on indications received from the shake detection module 224);
- one or more server data module(s) 330 for handling the storage of and/or access to media items and/or metadata relating to the media items; in some embodiments, the one or more server data module(s) 330 include:
   o a media content database 332 for storing media items; and
   o a metadata database 334 for storing metadata relating to the media items, including e.g., a genre associated with the respective media items.

In some embodiments, the media content server 104 includes web or Hypertext Transfer Protocol (HTTP) servers, File Transfer Protocol (FTP) servers, as well as web pages and applications implemented using Common Gateway Interface (CGI) script, PHP Hyper-text Preprocessor (PHP), Active Server Pages (ASP), Hyper Text Markup Language (HTML), Extensible Markup Language (XML), Java, JavaScript, Asynchronous JavaScript and XML (AJAX), XHP, Javelin, Wireless Universal Resource File (WURFL), and the like.

Each of the above identified modules stored in memory 212 and 306 corresponds to a set of instructions for performing a function described herein. The above identified modules or programs (i.e., sets of instructions) need not be implemented as separate software programs, procedures, or modules, and thus various subsets of these modules may be combined or otherwise re-arranged in various embodiments. In some embodiments, memory 212 and 306 optionally store a subset or superset of the respective modules and data structures identified above. Furthermore, memory 212 and 306 optionally store additional modules and data structures not described above.

Although FIG. 3 illustrates the media content server 104 in accordance with some embodiments, FIG. 3 is intended more as a functional description of the various features that may be present in one or more media content servers than as a structural schematic of the embodiments described herein. In practice, and as recognized by those of ordinary skill in the art, items shown separately could be combined and some items could be separated. For example, some items shown separately in FIG. 3 could be implemented on single servers and single items could be implemented by one or more servers. In some embodiments, media content database 332 and/or metadata database 334 are stored on devices (e.g., CDN 106) that are accessed by media content server 104. The actual number of servers used to implement the media content server 104, and how features are allocated among them, will vary from one implementation to another and, optionally, depends in part on the amount of data traffic that the server system handles during peak usage periods as well as during average usage periods.

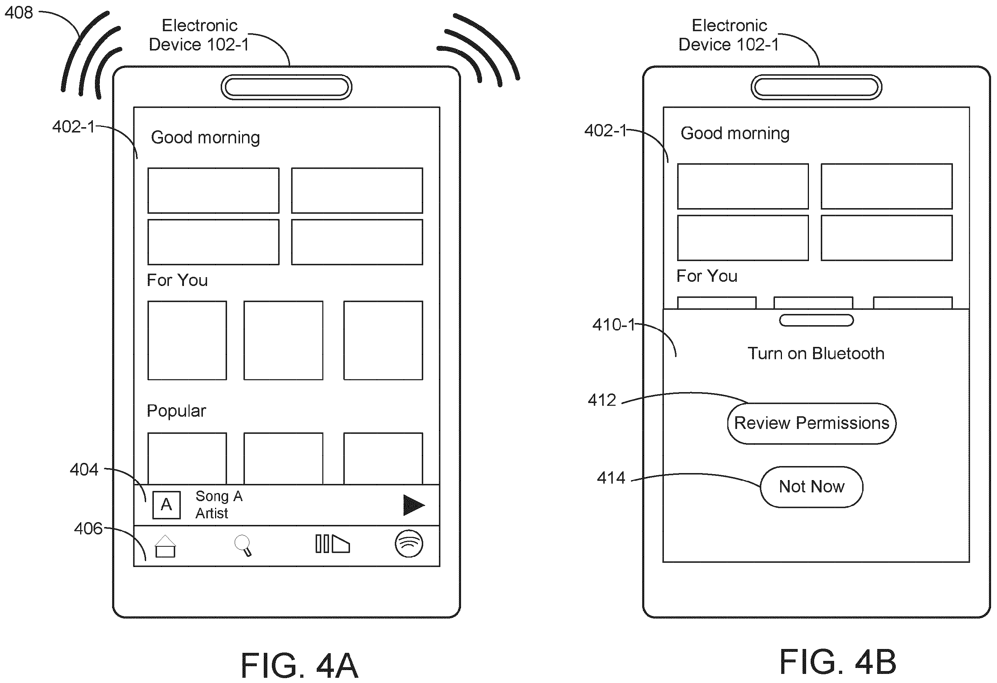

FIGS. 4A-4H illustrate example user interfaces for joining or initiating a shared playback session. FIG. 4A illustrates an electronic device 102-1 displaying a user interface 402-1 for a media application associated with a media-providing service. For example, the user interface 402-1 optionally includes indications of recommended media content items, a now playing module 404 (e.g., indicating that Song A is currently playing) and/or a navigation menu 406 (e.g., for switching between a home page of the media application, a search page of the media application, a media library of the media application and/or a profile page of the user of the electronic device 102-1). In some embodiments, the user (e.g., "User 1") of the electronic device 102-1 is associated with (e.g., is logged into the media-providing service at) one or more other electronic devices, such as one or more presentation devices (e.g., speakers, televisions, and/or other portable electronic devices, such as laptops, smartphones, tablets, etc.).

In some embodiments, in response to detecting a shake movement 408 (e.g., also referred to herein as a shake gesture) of the electronic device 102-1, the electronic device 102-1 initiates a process for starting and/or joining a shared playback session. In some embodiments, a shared playback session includes two or more users that have access to a same shared playback queue, such that the two or more users that participate in the shared listening session are able to control the shared playback queue (e.g., by adding, removing and/or reordering media content items). In some embodiments, a currently playing media content item from the shared playback session is played back at one or more presentation devices (e.g., two or more users are co-located and have access to the shared playback queue at respective electronic devices while the media content item is streamed, or otherwise played back at one or more presentation devices (e.g., optionally including at least one of the respective electronic device)). In some embodiments, a currently playing media content item from the shared playback session is played back at two or more presentation devices (e.g., that are not co-located) at substantially the same time (e.g., to provide a joint listening experience of the shared playback session).

In some embodiments, initiating the process for starting and/or joining a shared playback session includes displaying (FIG. 4B) a user interface element 410-1, such as a platter, that at least partially overlays the user interface 402-1, as illustrated in FIG. 4B. In some embodiments, the user interface element 410-1 includes an indication for the electronic device 102-1 to allow the media application permission to turn on or otherwise access a communication network (e.g., Bluetooth, BLE, near-field communication (NFC), device-to-device WiFi, etc.) in order to broadcast and/or discover a shared playback session. For example, the user interface element 410-1 includes a button 412 to review the permissions of the media application and a button 414 to dismiss the user interface element 410-1 (e.g., and stop the process for starting and/or joining a shared playback session). In some embodiments, the user interface element 410-1 is displayed in accordance with a determination that the media application does not currently have access to turn on the communication channel.

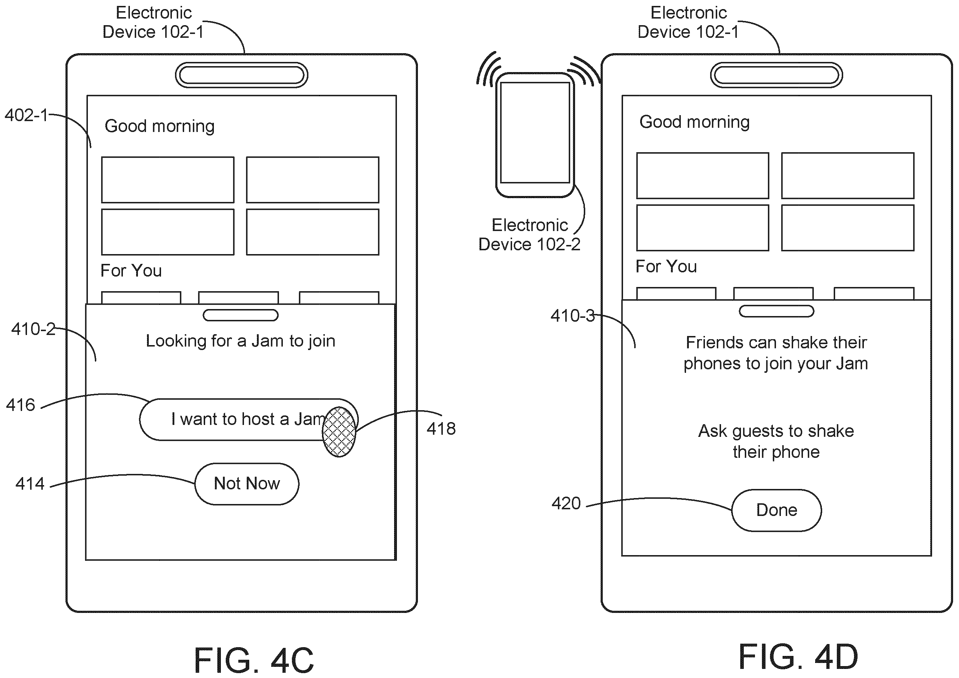

For example, if the media application has already been granted the permissions to control one or more types of communication channels (e.g., and/or after the user updates the permissions via the user interface element 410-1), the electronic device 102-1 forgoes displaying the user interface element 410-1 and displays the user interface element 410-2 (FIG. 4C).

In some embodiments, initiating the process for starting and/or joining a shared playback session includes performing two or more operations concurrently, including (i) searching for active shared playback sessions nearby and (ii) displaying an option for initiating a new shared playback session (e.g., with User 1 as the host of the new shared playback session). In some embodiments, the host of a shared playback session is a user that starts the shared playback session, while other users that join the shared playback session are considered participants of the shared playback session. In some embodiments, the host and participants have the same level of control for the shared playback session. In some embodiments, the host has permission to select the presentation device(s) at which to stream the shared playback session (e.g., and the participants optionally do not have this permission).

FIG. 4C illustrates the user interface element 410-2 includes an option 416 indicating "I want to host a Jam", which, when selected by a user input 418, initiates a shared playback session hosted by the user of the electronic device 102-1. In some embodiments, the user interface element 410-2 further includes an option to dismiss (button 414) the user interface element 410-2 and cease the process for starting and/or joining a shared playback session.

In some embodiments, in response to the user input 418, the electronic device 102-1 outputs a beacon or other signal (e.g., an advertising signal) indicating that the user of the electronic device 102-1 has initiated a shared playback session, such that one or more other electronic devices may find the shared playback session. For example, one or more other nearby electronic devices (e.g., within a proximity close enough to the electronic device 102-1 to detect the beacon or other signal output by the electronic device 102-1) are able to join (e.g., as participants) the shared playback session hosted by User 1. For example, as illustrated in FIG. 4D, the user interface element 410-3 is updated to indicate that the shared playback session has been initiated and that "Friends can shake their phones to join your Jam."

As such, in some embodiments, the one or more other nearby electronic devices join the shared playback session by performing a shake movement of the respective electronic device. For example, in some embodiments, after a shared playback session is established, other devices may join the shared playback session by performing a shake movement at substantially the same time as a shake movement of a device that is already participating (e.g., as a host and/or as a participant) in the shared playback session (e.g., as described below).

In some embodiments, after initiating the shared playback session at the electronic device 102-1, a done button 420 is provided in the user interface element 410-3 that, when selected, causes the electronic device 102-1 to cease display of the user interface element 410-3, and optionally displays a user interface in the media application for the shared playback session. In some embodiments, the user interface element 410-3 is automatically dismissed (e.g., ceases to be displayed) after a threshold amount of time has passed, without requiring user input.

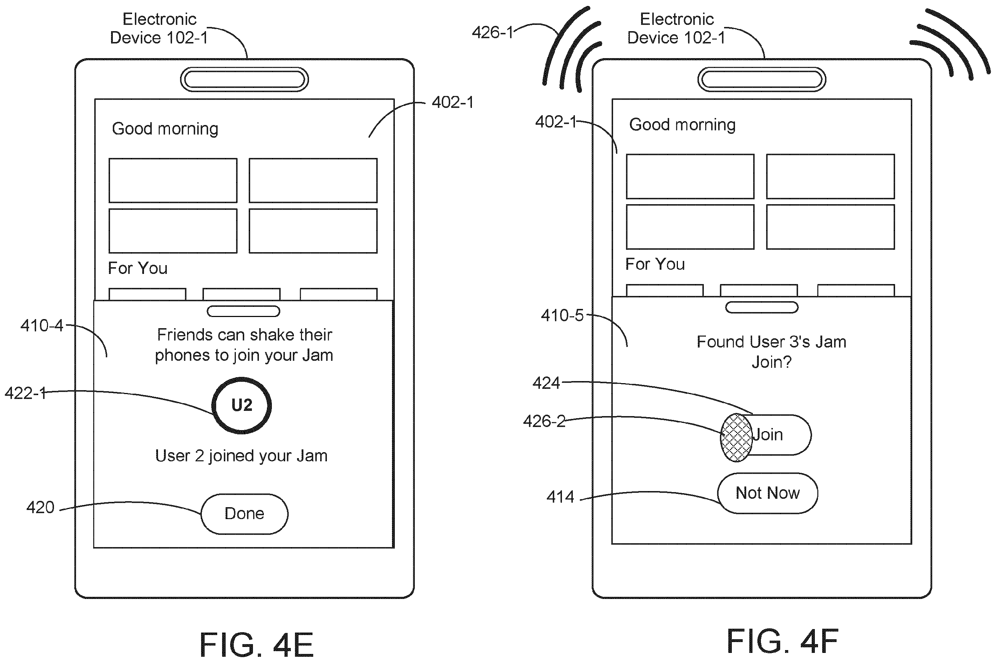

In some embodiments, while the user interface element 410-3 continues to be displayed, the electronic device 102-1 continues to broadcast (e.g., via the beacon or other signal) the shared playback session established by the user of the electronic device 102-1. In some embodiments, while the user interface element 410-3 is displayed, an electronic device 102-2 associated with a second user ("User 2") performs a shake movement. In some embodiments, in response to detecting that the electronic device 102-2 has performed the shake movement, the second user associated with the electronic device 102-2 is added to the shared playback session established by the electronic device 102-1, as illustrated in FIG. 4E.

In some embodiments, the user associated with the electronic device 102-2 is added to the shared playback session (e.g., rather than the electronic device 102-2 itself), such that User 2 is enabled to use one or more other electronic devices that are associated with User 2 (e.g., in which User 2 is logged into) (e.g., other than the electronic device 102-2) to control the shared playback session. Similarly, User 1 is enabled to access the shared playback session from electronic devices that User 1 is logged into other than the electronic device 102-1.

FIG. 4E illustrates displaying the user interface element 410-4 in response to User 2 joining the shared playback session. In some embodiments, a representation of the user 422-1 (e.g., a profile photo, an avatar, initials, or other representation) is displayed to indicate an identity of the user that joined the shared playback session.

In some embodiments, if the user interface element 410-3 is no longer displayed while the shake movement of the electronic device 102-2 is detected, the user must perform a shake movement of the electronic device 102-1 in order to enable the electronic device 102-2 to join the shared playback session. For example, after the user interface element 410-3 ceases to be displayed, the shared playback session is no longer in broadcast mode (e.g., indicating the shared playback session is available to join). In some embodiments, a shake movement of the electronic device 102-1 initiates the broadcast mode.

In some embodiments, as described above with reference to FIG. 4C, initiating the process for starting and/or joining a shared playback session includes performing two or more operations concurrently, including (i) searching for active shared playback sessions nearby and (ii) displaying an option for initiating a new shared playback session (e.g., with User 1 as the host of the new shared playback session). In some embodiments, one or more active shared playback sessions (e.g., hosted by another user) are detected by electronic device 102-1. For example, the user interface element 410-2 (FIG. 4C) is updated from "Looking for a Jam to join" to the user interface element 410-5 (FIG. 4F), indicating that a shared playback session hosted by User 3 has been found. In some embodiments, the shared playback session hosted by User 3 is found optionally without requiring User 3 to perform a shake movement of an electronic device associated with User 3. In some embodiments, the shared playback session hosted by User 3 is found only after User 3 has performed a shake movement and/or otherwise provided one or more inputs to enable a broadcast mode of the electronic device associated with User 3.

In some embodiments, indications of one or more detected active shared playback sessions are concurrently displayed with the option 416 (e.g., in the user interface element 410-2) indicating "I want to host a Jam" illustrated in FIG. 4C. In some embodiments, if no active shared playback sessions are detected, an indication of "No Jams nearby" is displayed in the user interface element 410-2.

FIG. 4F illustrates detecting a user input 426-1 corresponding to a shake movement of the electronic device 102-1. In some embodiments, in response to the user input 426-1, User 1 of the electronic device 102-1 joins the shared playback session of User 3. In some embodiments, a user input 426-2, such as a tap user input, directed to the "Join" button 424 in the user interface element 410-5 is detected, and in response to the user input 426-2, User 1 of the electronic device 102-1 joins the shared playback session of User 3. As such, User 1 joins the shared playback session of User 3 via a shake movement 426-1 and/or via a tap input 426-2.

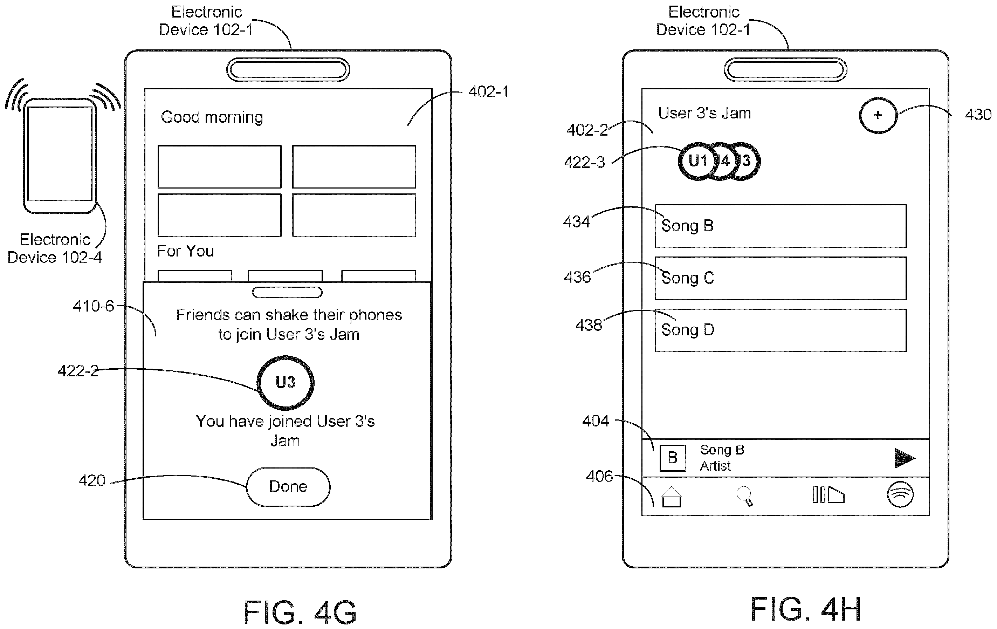

FIG. 4G illustrates that, after User 1 has joined the shared playback session of User 3, the user interface element 410-6 is displayed to confirm that User 1 is now participating in the shared playback session of User 3, including displaying a representation of the user 422-2 (e.g., of User 3, "U3") at the electronic device 102-1.

In some embodiments, while User 1 is participating in the shared playback session of User 3 (e.g., or another shared playback session, such as a shared playback session hosted by User 1 or another user), one or more additional electronic devices associated with one or more other users are enabled to join the shared playback session of User 3 (e.g., or the other shared playback session). For example, the one or more other users can join the shared playback session of User 3 by (i) performing a shake movement at substantially the same time (e.g., before and/or after, within a first threshold amount of time (e.g., within 5 seconds, within 10 seconds, within 1 minute, etc.) as the electronic device associated with User 3 (ii) performing a shake movement at substantially the same time (e.g., before and/or after, within the first threshold amount of time or a second threshold amount of time different from the first threshold amount of time) as the electronic device 102-1 that is participating in the shared playback session of User 3, or (iii) performing a shake movement without requiring a shake movement of another electronic device if the one or more other users are considered "trusted users."

In some embodiments, another user joining the shared playback session of User 3 is based at least in part on a geographic proximity between a respective device of the user that would like to join the shared playback session and an electronic device associated with User 3. For example, in accordance with a determination that the shake movement of the respective device is performed at substantially the same time as the shake movement of the electronic device associated with User 3 (e.g., or a device of another user participating in the shared playback session), the respective device is added to the shared playback session in response to a determination that the respective device and the electronic device associated with User 3 are co-located, optionally based on an established communication channel between the devices and/or based on geographic data of each device (e.g., that is shared with a server, such as media content server 104). In some embodiments, if the respective device is not determined to be within a geographic proximity of (e.g., does not establish a communication channel with) the electronic device associated with User 3, the user associated with the respective device is not added to the shared playback session.

For example, in FIG. 4G, the electronic device 102-4 is associated with User 4 (e.g., a different user than User 1, User 2 and User 3). In some embodiments, User 4 has a trusted relationship with User 1 of the electronic device 102-1, for example, User 4 is on a friends list or otherwise whitelisted based on one or more prior interactions with User 1 (e.g., a previous shared listening session that both joined, a recognized contact, etc.). In response to detecting a shake movement of the electronic device 102-4, User 4 is added to the shared playback session hosted by User 3 based on its trusted relationship with User 1 (e.g., without requiring User 1 to shake the electronic device 102-1).

FIG. 4H illustrates the electronic device 102-1 displaying a user interface 402-2 of the media application for the shared playback session hosted by User 3 (e.g., that User 1 has joined). In some embodiments, the user interface 402-2 includes representations of one or more upcoming media content items in the shared playback queue (e.g., Song B 434, Song C 436, and Song D 438). In some embodiments, the user interface 402-2 includes an option 430 to modify the shared playback queue (e.g., to add media content items, remove media content items and/or reorder media content items). In some embodiments, the user interface 402-2 includes one or more playback controls in the now playing module 404 (e.g., such that User 1 can pause, play, skip forward, skip backward and/or otherwise control playback of the currently playing media content item).

In some embodiments, the user interface 402-2 includes one or more indications 422-3 of users that are participating in the shared playback queue (e.g., User 1 "U1", User 4 "U4" and User 3 "U3").

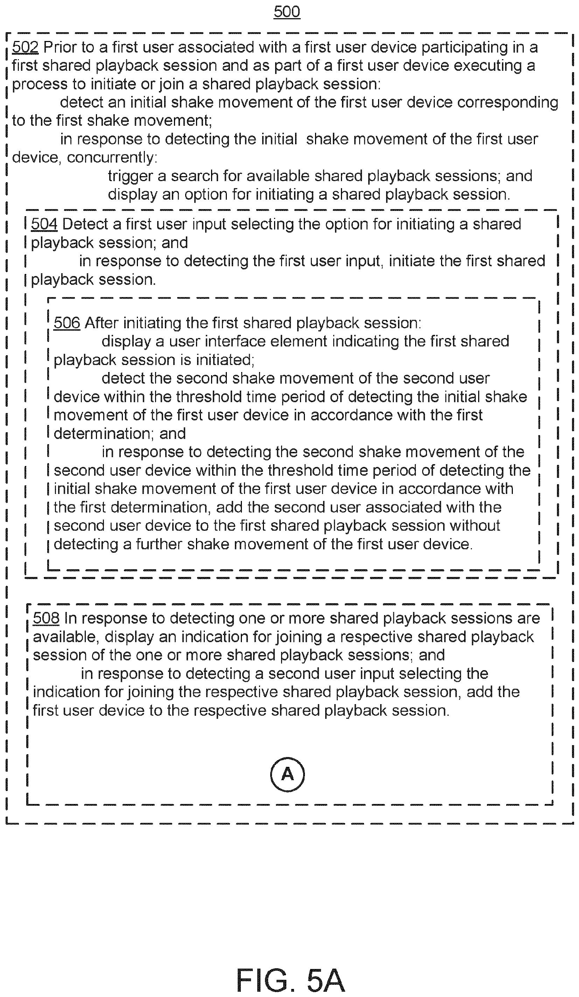

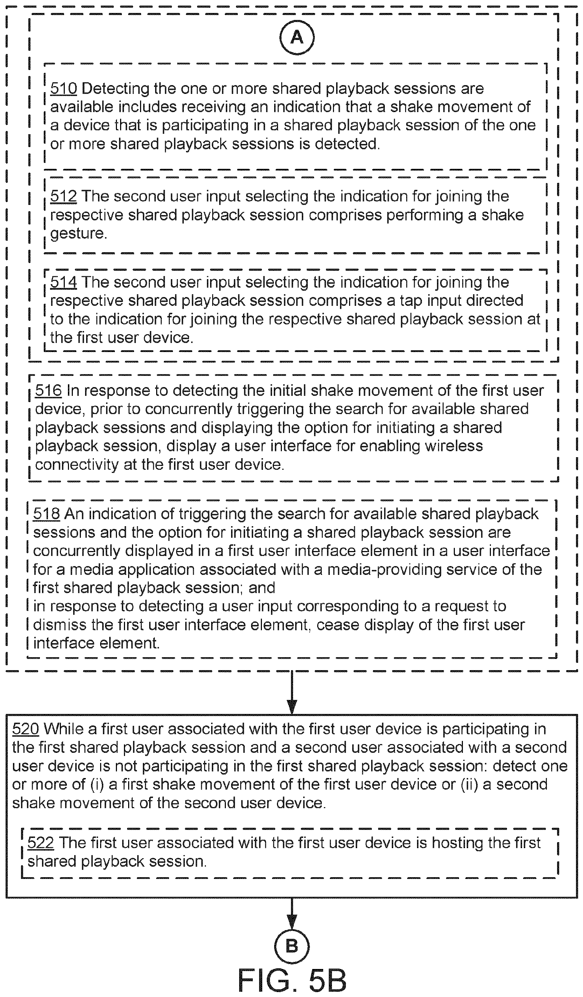

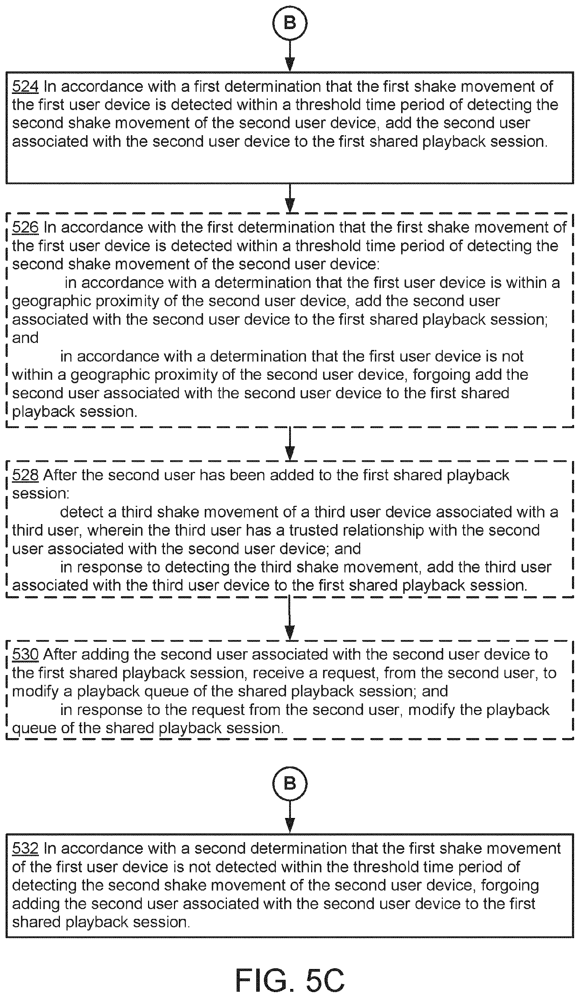

FIGS. 5A-5C are flow diagrams illustrating a method 500 of joining a shared playback session, in accordance with some embodiments. In some embodiments, method 500 is performed by a computer system (e.g., electronic device 102 and/or media content server 104, or a combination thereof).

In some embodiments, the method includes, prior to a first user associated with a first user device participating in the a shared playback session and as part of the first user device executing a process to initiate or join a shared playback session (502): detecting an initial shake movement (e.g., optionally the initial shake movement is a first shake movement, described below) of the first user device corresponding to the first shake movement; in response to detecting the initial shake movement of the first user device, concurrently: triggering a search for available shared playback sessions (e.g., and optionally displaying an indication that the search has been triggered); and displaying an option for initiating a shared playback session. For example, as described with reference to FIG. 4A and FIG. 4C, a shake movement 408 of electronic device 102-1 is detected, and in response to the shake movement 408, the user interface element 410-2 is displayed and the process for starting and/or joining a shared playback session is initiated, the process including performing two or more operations concurrently, including (i) searching for active shared playback sessions nearby and (ii) displaying an option for initiating a new shared playback session (e.g., with User 1 as the host of the new shared playback session).

In some embodiments, the method includes detecting (504) a first user input (e.g., user input 418, FIG. 4C) selecting the option for initiating a shared playback session; and in response to detecting the first user input, initiating the first shared playback session (e.g., the first user device as the host of the first shared playback session), as described with reference to FIGS. 4C-4E.

In some embodiments, the method includes, after initiating the first shared playback session (506): displaying a user interface element (e.g., user interface element 410-3, FIG. 4D) indicating the first shared playback session is initiated; detecting the second shake movement of the second user device (e.g., electronic device 102-2, FIG. 4D) within the threshold time period of detecting the initial shake movement of the first user device in accordance with the first determination; and in response to detecting the second shake movement of the second user device within the threshold time period of detecting the initial shake movement of the first user device in accordance with the first determination, adding the second user associated with the second user device to the first shared playback session without detecting a further shake movement of the first user device, as described with reference to FIGS. 4D-4E.

In some embodiments, the method includes, in response to detecting one or more shared playback sessions are available (508) (e.g., the one or more shared playback sessions are nearby within a threshold proximity of the first user device), displaying an indication (e.g., in the user interface element 410-5, FIG. 4F) for joining a respective shared playback session of the one or more shared playback sessions; and in response to detecting a second user input selecting the indication for joining the respective shared playback session, adding the first user device to the respective shared playback session (e.g., as a participant) rather than the first user device initiating a shared playback session. For example, in some embodiments, when the first user associated with the first user device is not hosting a shared playback session, the first user associated with the first user device joins an existing shared playback session that is hosted by another user (e.g., User 3, FIG. 4F) associated with a different user device.

In some embodiments, detecting the one or more shared playback sessions are available includes (510) receiving an indication that a shake movement of a device that is participating in a shared playback session of the one or more shared playback sessions is detected. For example, a device that is participating in User 3's shared playback session performs a shake movement in order for the electronic device 102-1 to detect the availability of User 3's shared playback session.

In some embodiments, the second user input selecting the indication for joining the respective shared playback session comprises (512) performing a shake gesture (e.g., a shake movement of the first user device), for example, the user input 426-1 (FIG. 4F).

In some embodiments, the second user input selecting the indication for joining the respective shared playback session comprises (514) a tap input directed to the indication for joining the respective shared playback session at the first user device, for example, the user input 426-2 (FIG. 4F).

In some embodiments, the method includes, in response to detecting the initial shake movement of the first user device, prior to concurrently triggering the search for available shared playback sessions and displaying the option for initiating a shared playback session, displaying (516) a user interface for enabling wireless connectivity at the first user device (e.g., a prompt to review Bluetooth permissions and/or another type of wireless connectivity), as described with reference to FIG. 4B.

In some embodiments, an indication of triggering the search for available shared playback sessions and the option for initiating a shared playback session are concurrently displayed (518) in a first user interface element (e.g., a platter) (e.g., user interface element 410-2, FIG. 4C) in a user interface for a media application associated with a media-providing service of the first shared playback session. In some embodiments, the method includes, in response to detecting a user input corresponding to a request to dismiss the first user interface element (e.g., selecting the button 414, FIG. 4C), ceasing display of the first user interface element (and displaying the user interface for the media application).

In some embodiments, the method includes, while a first user associated with a first user device is participating in a first shared playback session and a second user associated with a second user device is not participating in the first shared playback session: detecting (520) one or more of (i) a first shake movement of the first user device or (ii) a second shake movement of the second user device. For example, as described with reference to FIG. 4G, a user can join the shared playback session of User 3 by (i) performing a shake movement at substantially the same time (e.g., before and/or after, within a first threshold amount of time (e.g., within 5 seconds, within 10 seconds, within 1 minute, etc.) as the electronic device associated with User 3 or) performing a shake movement at substantially the same time (e.g., before and/or after, within the first threshold amount of time or a second threshold amount of time different from the first threshold amount of time) as an electronic device 102-1 that is participating in the shared playback session of User 3.

In some embodiments, the first user associated with the first user device is (522) hosting the first shared playback session. For example, as described with reference to FIGS. 4D-4E, the electronic device 102-2 joins (e.g., via a shake movement) the shared playback session that is hosted by User 1 of the electronic device 102-1.

In some embodiments, the method includes, in response to detecting the first shake movement of the first user device, outputting, via a wireless communication network such as Bluetooth low energy (BLE) or other communication networks, an advertising signal that the first shared playback session is available. For example, while User 1 of the electronic device 102-1 is participating and/or hosting a shared playback session, in response to detecting a shake input of the electronic device 102-1, the electronic device 102-1 outputs a beacon or other signal indicating the availability of the shared playback session.

In some embodiments, the method includes, in accordance with a first determination that the first shake movement of the first user device is detected within a threshold time period of detecting the second shake movement of the second user device, adding (524) the second user associated with the second user device (e.g., and/or associated with another user device (e.g., the second user is added to the first shared playback session such that the second user may access the first shared playback session from any device associated with (e.g., logged into an account of) the second user)) to the first shared playback session, as described with reference to FIGS. 4D-4E. In some embodiments, detecting the second shake movement of the second user device includes receiving an indication, from the second user device (e.g., optionally via a server system and/or via a direct connection between the first user device and the second user device), of the shake movement. In some embodiments, the second user is added to the first playback session after (e.g., in response to) detecting a user input from the second user accepting an invitation that is sent to the second user (e.g., to the second user device).

In some embodiments, the method includes, in accordance with the first determination that the first shake movement of the first user device is detected within a threshold time period of detecting the second shake movement of the second user device (526): in accordance with a determination that the first user device is within a geographic proximity (e.g., by establishing a wireless communication channel between the first user device and the second user device, or otherwise determining geographic locations of the first user device and the second user device) of the second user device, adding the second user associated with the second user device to the first shared playback session; and in accordance with a determination that the first user device is not within a geographic proximity (e.g., a wireless communication channel between the first user device and the second user device is not established) of the second user device, forgoing adding the second user associated with the second user device to the first shared playback session.

In some embodiments, the method includes, after the second user has been added to the first shared playback session (528): detecting a third shake movement of a third user device associated with a third user, wherein the third user has a trusted relationship (e.g., is stored as a trusted user and/or is otherwise whitelisted by) with the second user associated with the second user device; and in response to detecting the third shake movement, adding the third user associated with the third user device to the first shared playback session (e.g., without detecting a shake movement of the second user device and/or without detecting a shake movement of the first user device), as described with reference to FIG. 4G.

In some embodiments, the method includes, after adding the second user associated with the second user device to the first shared playback session, receiving (530) a request, from the second user (e.g., from the second user device and/or another user device associated with the second user, via the wireless communication channel and/or via a server system), to modify a playback queue of the shared playback session; and in response to the request from the second user, modifying the playback queue of the shared playback session. In some embodiments, the shared playback session is controllable by each device that is participating in the shared playback session. In some embodiments, the shared playback queue includes media content items that are played back by one or more presentations devices and/or by one or more user devices (e.g., the first user device and the second user device). For example, as described with reference to FIG. 4H, users that are participating in a shared playback session are enabled to modify the shared playback queue and/or otherwise control playback of the shared playback session.

In some embodiments, in accordance with a second determination that the first shake movement of the first user device is not detected within the threshold time period of detecting the second shake movement of the second user device, forgoing (532) adding the second user associated with the second user device to the first shared playback session. In some embodiments, the threshold time period is a time before detecting the first shake movement (e.g., the second device performs the shake movement before the first device) and/or is a time after detecting the first shake movement (e.g., the second device performs the shake movement after the first device).

Although FIGS. 5A-5C illustrate a number of logical stages in a particular order, stages which are not order dependent may be reordered and other stages may be combined or broken out. Some reordering or other groupings not specifically mentioned will be apparent to those of ordinary skill in the art, so the ordering and groupings presented herein are not exhaustive. Moreover, it should be recognized that the stages could be implemented in hardware, firmware, software, or any combination thereof. In addition, in accordance with some embodiments, various operations described with respect to other methods may be combined with the operations described with respect to method 500.

According to certain examples, there is also disclosed:
Example 1. A method, comprising:
   while a first user associated with a first user device is participating in a first shared playback session and a second user associated with a second user device is not participating in the first shared playback session:
   detecting one or more of (i) a first shake movement of the first user device or (ii) a second shake movement of the second user device;
   in accordance with a first determination that the first shake movement of the first user device is detected within a threshold time period of detecting the second shake movement of the second user device, adding the second user associated with the second user device to the first shared playback session; and
   in accordance with a second determination that the first shake movement of the first user device is not detected within the threshold time period of detecting the second shake movement of the second user device, forgoing adding the second user associated with the second user device to the first shared playback session.
Example 2. The method of example 1, further comprising, in accordance with the first determination that the first shake movement of the first user device is detected within a threshold time period of detecting the second shake movement of the second user device:
   in accordance with a determination that the first user device is within a geographic proximity of the second user device, adding the second user associated with the second user device to the first shared playback session; and
   in accordance with a determination that the first user device is not within a geographic proximity of the second user device, forgoing adding the second user associated with the second user device to the first shared playback session.
Example 3. The method of example 1 or 2, further comprising, prior to the first user associated with the first user device participating in the first shared playback session and as part of the first user device executing a process to initiate or join a shared playback session:
   detecting an initial shake movement of the first user device corresponding to the first shake movement;
   in response to detecting the initial shake movement of the first user device, concurrently:
      triggering a search for available shared playback sessions; and
      displaying an option for initiating a shared playback session.
Example 4. The method of example 3, further comprising:
   detecting a first user input selecting the option for initiating a shared playback session; and
   in response to detecting the first user input, initiating the first shared playback session.
Example 5. The method of example 4, further comprising, after initiating the first shared playback session:
   displaying a user interface element indicating the first shared playback session is initiated;
   detecting the second shake movement of the second user device within the threshold time period of detecting the initial shake movement of the first user device in accordance with the first determination; and
   in response to detecting the second shake movement of the second user device within the threshold time period of detecting the initial shake movement of the first user device in accordance with the first determination, adding the second user associated with the second user device to the first shared playback session without detecting a further shake movement of the first user device.
Example 6. The method of example 3, further comprising:
   in response to detecting one or more shared playback sessions are available, displaying an indication for joining a respective shared playback session of the one or more shared playback sessions; and
   in response to detecting a second user input selecting the indication for joining the respective shared playback session, adding the first user device to the respective shared playback session.
Example 7. The method of example 6, wherein detecting the one or more shared playback sessions are available includes receiving an indication that a shake movement of a device that is participating in a shared playback session of the one or more shared playback sessions is detected.
Example 8. The method of example 6 or 7, wherein the second user input selecting the indication for joining the respective shared playback session comprises performing a shake gesture or a tap input directed to the indication for joining the respective shared playback session at the first user device.
Example 9. The method of any of examples 3 to 8, further comprising, in response to detecting the initial shake movement of the first user device, prior to concurrently triggering the search for available shared playback sessions and displaying the option for initiating a shared playback session, displaying a user interface for enabling wireless connectivity at the first user device.
Example 10. The method of any of examples 3 to 9, wherein an indication of triggering the search for available shared playback sessions and the option for initiating a shared playback session are concurrently displayed in a first user interface element in a user interface for a media application associated with a media-providing service of the first shared playback session; and
   the method includes, in response to detecting a user input corresponding to a request to dismiss the first user interface element, ceasing display of the first user interface element.
Example 11. The method of example 1 or 2, wherein the first user associated with the first user device is hosting the first shared playback session.
Example 12. The method of any preceding example, further comprising, after the second user has been added to the first shared playback session:
   detecting a third shake movement of a third user device associated with a third user, wherein the third user has a trusted relationship with the second user associated with the second user device; and
   in response to detecting the third shake movement, adding the third user associated with the third user device to the first shared playback session.
Example 13. The method of any preceding example, further comprising:
   after adding the second user associated with the second user device to the first shared playback session, receiving a request, from the second user, to modify a playback queue of the shared playback session; and
   in response to the request from the second user, modifying the playback queue of the shared playback session.
Example 14. A computer system comprising:
   one or more processors; and
   memory storing one or more programs, the one or more programs including instructions for:
      while a first user associated with a first user device is participating in a first shared playback session and a second user associated with a second user device is not participating in the first shared playback session:
      detecting one or more of (i) a first shake movement of the first user device or (ii) a second shake movement of the second user device;
      in accordance with a first determination that the first shake movement of the first user device is detected within a threshold time period of detecting the second shake movement of the second user device, adding the second user associated with the second user device to the first shared playback session; and
      in accordance with a second determination that the first shake movement of the first user device is not detected within the threshold time period of detecting the second shake movement of the second user device, forgoing adding the second user associated with the second user device to the first shared playback session.
Example 15. The computer system of example 14, the one or more programs further comprising instructions for, in accordance with the first determination that the first shake movement of the first user device is detected within a threshold time period of detecting the second shake movement of the second user device:
   in accordance with a determination that the first user device is within a geographic proximity of the second user device, adding the second user associated with the second user device to the first shared playback session; and
   in accordance with a determination that the first user device is not within a geographic proximity of the second user device, forgoing adding the second user associated with the second user device to the first shared playback session.
Example 16. The computer system of example 14 or 15, the one or more programs further comprising instructions for, prior to the first user associated with the first user device participating in the first shared playback session and as part of the first user device executing a process to initiate or join a shared playback session:
   detecting an initial shake movement of the first user device corresponding to the first shake movement;
   in response to detecting the initial shake movement of the first user device, concurrently:
      triggering a search for available shared playback sessions; and
      displaying an option for initiating a shared playback session.
Example 17. The computer system of example 16, the one or more programs further comprising instructions for, :
   detecting a first user input selecting the option for initiating a shared playback session; and
   in response to detecting the first user input, initiating the first shared playback session.
Example 18. The computer system of example 17, the one or more programs further comprising instructions for, after initiating the first shared playback session:
   displaying a user interface element indicating the first shared playback session is initiated;
   detecting the second shake movement of the second user device within the threshold time period of detecting the initial shake movement of the first user device in accordance with the first determination; and
   in response to detecting the second shake movement of the second user device within the threshold time period of detecting the initial shake movement of the first user device in accordance with the first determination, adding the second user associated with the second user device to the first shared playback session without detecting a further shake movement of the first user device.
Example 19. A non-transitory computer-readable storage medium storing one or more programs for execution by a computer system with one or more processors, the one or more programs comprising instructions for:
   while a first user associated with a first user device is participating in a first shared playback session and a second user associated with a second user device is not participating in the first shared playback session:
   detecting one or more of (i) a first shake movement of the first user device or (ii) a second shake movement of the second user device;
   in accordance with a first determination that the first shake movement of the first user device is detected within a threshold time period of detecting the second shake movement of the second user device, adding the second user associated with the second user device to the first shared playback session; and
   in accordance with a second determination that the first shake movement of the first user device is not detected within the threshold time period of detecting the second shake movement of the second user device, forgoing adding the second user associated with the second user device to the first shared playback session.

The foregoing description, for purpose of explanation, has been described with reference to specific embodiments. However, the illustrative discussions above are not intended to be exhaustive or to limit the embodiments to the precise forms disclosed. Many modifications and variations are possible in view of the above teachings. The embodiments were chosen and described in order to best explain the principles and their practical applications, to thereby enable others skilled in the art to best utilize the embodiments and various embodiments with various modifications as are suited to the particular use contemplated.

## Claims

1. A method, comprising:
while a first user associated with a first user device is participating in a first shared playback session and a second user associated with a second user device is not participating in the first shared playback session:
detecting one or more of (i) a first shake movement of the first user device or (ii) a second shake movement of the second user device;
in accordance with a first determination that the first shake movement of the first user device is detected within a threshold time period of detecting the second shake movement of the second user device, adding the second user associated with the second user device to the first shared playback session; and
in accordance with a second determination that the first shake movement of the first user device is not detected within the threshold time period of detecting the second shake movement of the second user device, forgoing adding the second user associated with the second user device to the first shared playback session.

2. The method of claim 1, further comprising, in accordance with the first determination that the first shake movement of the first user device is detected within a threshold time period of detecting the second shake movement of the second user device:
in accordance with a determination that the first user device is within a geographic proximity of the second user device, adding the second user associated with the second user device to the first shared playback session; and
in accordance with a determination that the first user device is not within a geographic proximity of the second user device, forgoing adding the second user associated with the second user device to the first shared playback session.

3. The method of claim 1 or 2, further comprising, prior to the first user associated with the first user device participating in the first shared playback session and as part of the first user device executing a process to initiate or join a shared playback session:
detecting an initial shake movement of the first user device corresponding to the first shake movement;
in response to detecting the initial shake movement of the first user device, concurrently:
triggering a search for available shared playback sessions; and
displaying an option for initiating a shared playback session.

4. The method of claim 3, further comprising:
detecting a first user input selecting the option for initiating a shared playback session; and
in response to detecting the first user input, initiating the first shared playback session.

5. The method of claim 4, further comprising, after initiating the first shared playback session:
displaying a user interface element indicating the first shared playback session is initiated;
detecting the second shake movement of the second user device within the threshold time period of detecting the initial shake movement of the first user device in accordance with the first determination; and
in response to detecting the second shake movement of the second user device within the threshold time period of detecting the initial shake movement of the first user device in accordance with the first determination, adding the second user associated with the second user device to the first shared playback session without detecting a further shake movement of the first user device.

6. The method of claim 3, further comprising:
in response to detecting one or more shared playback sessions are available, displaying an indication for joining a respective shared playback session of the one or more shared playback sessions; and
in response to detecting a second user input selecting the indication for joining the respective shared playback session, adding the first user device to the respective shared playback session.

7. The method of claim 6, wherein detecting the one or more shared playback sessions are available includes receiving an indication that a shake movement of a device that is participating in a shared playback session of the one or more shared playback sessions is detected.

8. The method of claim 6 or 7, wherein the second user input selecting the indication for joining the respective shared playback session comprises performing a shake gesture or a tap input directed to the indication for joining the respective shared playback session at the first user device.

9. The method of any of claims 3 to 8, further comprising, in response to detecting the initial shake movement of the first user device, prior to concurrently triggering the search for available shared playback sessions and displaying the option for initiating a shared playback session, displaying a user interface for enabling wireless connectivity at the first user device.

10. The method of any of claims 3 to 9, wherein an indication of triggering the search for available shared playback sessions and the option for initiating a shared playback session are concurrently displayed in a first user interface element in a user interface for a media application associated with a media-providing service of the first shared playback session; and
the method includes, in response to detecting a user input corresponding to a request to dismiss the first user interface element, ceasing display of the first user interface element.

11. The method of claim 1 or 2, wherein the first user associated with the first user device is hosting the first shared playback session.

12. The method of any preceding claim, further comprising, after the second user has been added to the first shared playback session:
detecting a third shake movement of a third user device associated with a third user, wherein the third user has a trusted relationship with the second user associated with the second user device; and
in response to detecting the third shake movement, adding the third user associated with the third user device to the first shared playback session.

13. The method of any preceding claim, further comprising:
after adding the second user associated with the second user device to the first shared playback session, receiving a request, from the second user, to modify a playback queue of the shared playback session; and
in response to the request from the second user, modifying the playback queue of the shared playback session.

14. A computer system comprising:
one or more processors; and
memory storing one or more programs, the one or more programs including instructions for:
while a first user associated with a first user device is participating in a first shared playback session and a second user associated with a second user device is not participating in the first shared playback session:
detecting one or more of (i) a first shake movement of the first user device or (ii) a second shake movement of the second user device;
in accordance with a first determination that the first shake movement of the first user device is detected within a threshold time period of detecting the second shake movement of the second user device, adding the second user associated with the second user device to the first shared playback session; and
in accordance with a second determination that the first shake movement of the first user device is not detected within the threshold time period of detecting the second shake movement of the second user device, forgoing adding the second user associated with the second user device to the first shared playback session.

15. A non-transitory computer-readable storage medium storing one or more programs for execution by a computer system with one or more processors, the one or more programs comprising instructions for:
while a first user associated with a first user device is participating in a first shared playback session and a second user associated with a second user device is not participating in the first shared playback session:
detecting one or more of (i) a first shake movement of the first user device or (ii) a second shake movement of the second user device;
in accordance with a first determination that the first shake movement of the first user device is detected within a threshold time period of detecting the second shake movement of the second user device, adding the second user associated with the second user device to the first shared playback session; and
in accordance with a second determination that the first shake movement of the first user device is not detected within the threshold time period of detecting the second shake movement of the second user device, forgoing adding the second user associated with the second user device to the first shared playback session.
